# EUROPEAN PATENT APPLICATION

(11) **EP 1 172 194 A2**
(43) Date of publication of application: **16.01.2002**
(21) Application number: 01113973.0
(22) Date of filing: 08.06.2001
(51) Int. Cl.: B29C 45/50, B29C 45/76, B29C 45/52

(54) **Method and device for accurately controlling a shot dosage of molten plastic material to be injected into a molding cavity**

(30) Priority: 12.06.2000 US 592591
(71) Applicant: ODME International B.V., 5657 EB Eindhoven (NL)
(72) Inventor: Eriksson, Göran, 645 43 Strängnas (SE); Ragnerius, Per-Olof, Ragner, 433 62 Sävedalen (SE)
(74) Representative: Prins, Adrianus Willem

(57) **Abstract**

An improved moulding method and device which will ensure an accurate, constant shot weight of the dosage of molten plastic material being injected into the mould cavity, thereby to obtain substrate discs having a non-varying thickness. The method of the present invention comprises the step of sensing an actual, secondary rear end position of a moveable wall obtained shortly after the interruption of the supply of molten plastic material to a metering chamber, and then performing a forward stroke of said wall with a predetermined length, whereby an accurately metered constant dosage of molten plastic material will always be injected during each shot. The device includes a means for sensing an actual, secondary rear end position of the moveable wall, and a means for obtaining a predetermined length of the forward stroke of the moveable wall, thereby to inject an accurately metered constant dosage of molten plastic material during each shot.

## Description

### Technical Field of the Invention

The present invention relates to a method and a device for accurately controlling a shot dosage of molten plastic material to be injected into a moulding cavity of a moulding machine for moulding centrally apertured optical discs.

### Background of the Invention

The manufacture of multilayer DVD's ( such as Digital Versatile Discs of type "SD 9") generally requires extreme accuracy as regards the thickness of the adhesive layer bonding two disc elements of polycarbonate together. A high accuracy also applies to the thickness of the two disc elements, since variations in their thickness may affect the thickness of the adhesive layer and thus the total thickness of the finished DVD, which may have a negative impact on the readability thereof.

When moulding a DVD substrate disc molten plastic material is supplied to a metering chamber of an injection unit until a moveable wall of the metering chamber (normally a front end portion of a retractable extruder screw) has reached a predetermined rear position. Then, the moveable wall (the extruder screw) performs a forward stroke to inject the molten plastic material in the metering chamber into the moulding cavity of the moulding machine via an injection nozzle downstream of the metering chamber. It has been observed, however, that after the moveable wall has reached its desired predetermined rear position the extruder screw, and thus the moveable wall, has a tendency of performing a continued backwards creeping movement, which will influence the rear position actually taken by the piston. Most likely, this could be ascribed to relaxation of the melt pressure being built up along the extruder screw during rotation thereof, when the rotation stops, leading to a material transport pushing the screw and its piston further backwards. Also, inertia properties or dynamics of the hydraulic system controlling the piston for the axial forward displacement of the screw may likewise influence the actual rear piston position obtained. This in turn will create discrepancies of the volume of the molten plastic material being actually injected into the moulding cavity as the piston then is performing a forward stroke to a fixed forward position, resulting in moulded substrate discs having varying thickness

### Disclosure of the Invention

An object of the present invention is to eliminate this drawback of the previous moulding methods and devices and to provide an improved moulding method and device which will ensure an accurate, constant shot weight of the dosage of molten plastic material being injected into the mould cavity, thereby to obtain substrate discs having a non-varying thickness.

For this purpose the method of the present invention comprises the steps of:
sensing a rearward movement of a movable wall of the metering chamber;
immediately interrupting the supply of the molten plastic material to the metering chamber when the movable wall of the metering chamber has reached a sensed, predetermined, primary rear position; and
actuating the moveable wall to perform a forward stroke to inject the molten plastic material in the metering chamber into the moulding cavity. In its widest sense the method of the present invention comprises the further step of sensing an actual, secondary rear end position of the moveable wall obtained shortly after the interruption of the supply of molten plastic material, and then performing the forward stroke with a predetermined length, whereby an accurately metered constant dosage of molten plastic material will always be injected during each shot.

A suitable embodiment of the inventive method comprises the further step of adjusting, in dependence on the sensed secondary rear end position of the moveable wall, the position of an end stop means for the forward stroke of the moveable wall, so that a constant length of the forward stroke will always be positively and individually obtained for each shot.

The device of the present invention for accurately controlling a shot dosage of molten plastic material to be injected into a moulding cavity of a moulding machine when moulding centrally apertured optical discs, comprises an injection unit, including
an injection nozzle,
a shot metering chamber upstream thereof,
a means for supplying molten plastic material to said metering chamber,
a piston member connected to a movable wall of the metering chamber,
a means for sensing a predetermined, primary rear position of the movable wall,
a means for interrupting the supply of the molten plastic material to the metering chamber when the movable wall has reached said predetermined rear position, and
a means for actuating the piston member to perform a forward stoke to inject molten plastic material into the moulding cavity through said injection nozzle. In accordance with the present invention the device further includes:
a means for sensing an actual, secondary rear end position of the moveable wall obtained shortly after the interruption of the supply of molten plastic material to the metering chamber, and
a means for obtaining a predetermined length of the forward stroke of the moveable wall, thereby to inject an accurately metered constant dosage of molten plastic material during each shot.

In a suitable embodiment of the inventive device said means for obtaining a predetermined length of the forward stroke of the moveable wall comprises a means for adjusting a forward end stop for the piston member in dependence on the sensed actual rear end position of the movable wall so that a constant length of the forward stroke will always be positively and individually obtained for each shot.

Further details and features of the inventive method and device are defined in the appended claims and will be more specifically described below under reference to the appended drawings.

### Brief Description of the Drawings

Fig. 1 illustrates schematically, partly in section, a side elevational view of an injection device in accordance with a preferred embodiment thereof with the extruder screw located in a rear position;
Fig. 2 is a view similar to Fig.1 but illustrates the extruder screw in an advanced position after injection of a shot dosage of molten plastic material into a moulding cavity of the moulding machine; and
Fig.3 illustrates schematically, partly in section, a side elevational view of an injection device in accordance with a second embodiment of the present invention.

### Description of preferred embodiments

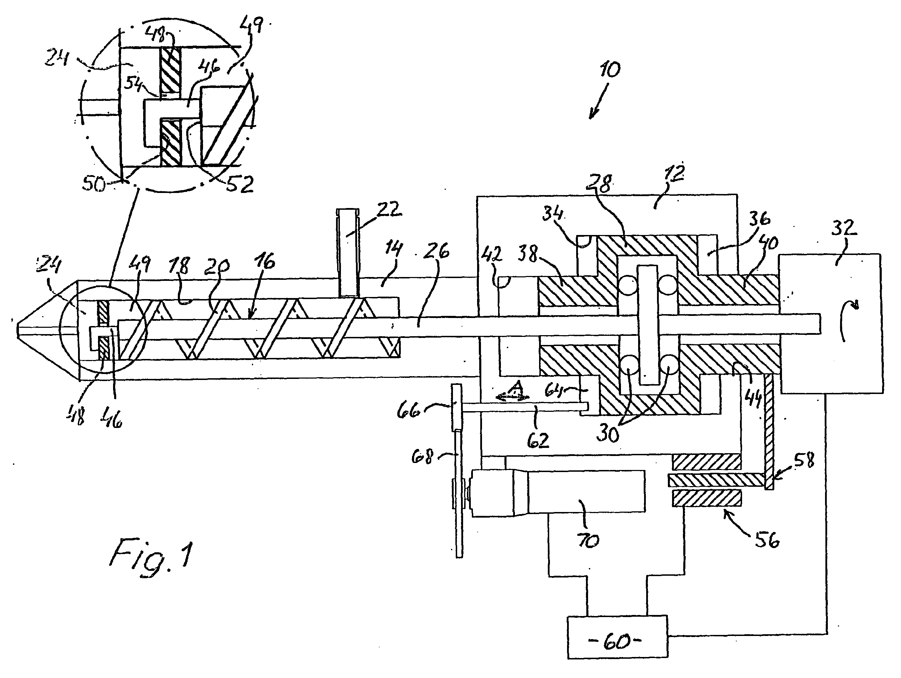

In fig. 1 and 2, 10 generally denotes an injection unit for injecting a predetermined shot dosage of molten plastic material into a moulding cavity of a moulding machine (not shown) for manufacturing of centrally apertured optical discs, such as disc substrates for digital versatile discs (DVD's). The injection unit 10 comprises a body 12 carrying in a front part thereof a housing 14 for an extruder screw 16 which is rotatable and displaceable within a cylindrical bore 18 in the housing 14. The screw 16 has an external thread 20 for feeding molten plastic material, supplied to a rear section of the cylindrical bore 18 through an inlet tube 22 for plastic material, to a metering chamber 24 at the front end of the cylindrical bore 18, when the screw 16 is rotated. A shaft 26 of the screw 16 extends rearwardly into a hollow piston 28 and is rotatably journalled therein by means of thrust bearings 30 such that the screw 16 may rotate relative to the piston 28 by means of a motor 32 and be linearly displaced together with the piston 28 when the same is moving backwards or forwardly.

The piston 28 is movable linearly in a forward direction in a cylinder bore 34 in the body 12 when a hydraulic pressure fluid is supplied to a rear chamber 36 of the cylinder bore 34 through a fluid supply line (not shown). The piston 28 is further guided in the body 12 by means of front and rear guide portions 38 and 40, fitted into a corresponding bore 42 and 44, respectively, in the body 12.

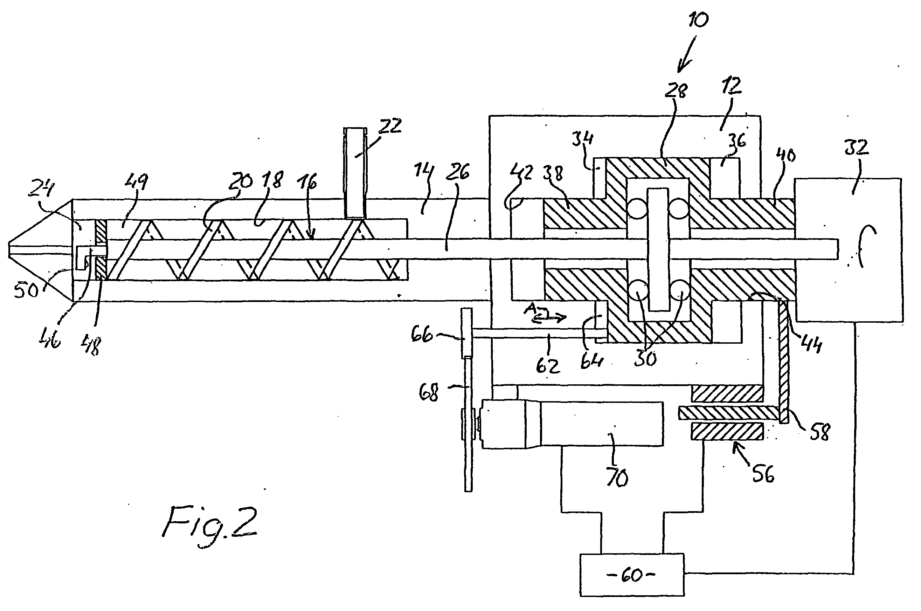

A pin 46 attached to, or formed integral with, the front end of the screw 16 supports a washer or a wall member 48 which may slide on the pin between a front position (Fig. 1), in which the wall member 48 rests against a shoulder 50 at the tip of the pin 46 during a rearward stroke of the piston 28 and the screw 16, and a rear position, in which the wall member 48 rests against a seat 52 at the front end of the screw 16 during a forward stroke of the piston 28 and the screw 16. There is a gap 54 between the wall member 48 and the pin 46 which allows for passage of molten plastic material from the space 49 between the screw 16 and the cylindrical bore 18 to the metering chamber 24 during a rearward stroke of the screw 16. During a forward stroke of the latter (Fig. 2) the wall member 48 moves to a stop against the seat 52 so as to interrupt the fluid communication between said space and the metering chamber 24. The wall member 48 thus functions as a check valve for preventing molten plastic material in the metering chamber 24 from flowing back to the space upstream thereof during the forward stroke of the screw 16 (the injection phase).

A sensor 56 of any suitable kind is adapted to accurately sense the position of the piston 28 via a member 58 fixedly secured to the piston 28, and thus sense the exact moment when the piston 28 reaches a predetermined rear position, i.e. when the metering chamber 24 has been filled with a given volume of plastic material, and at that moment emit an output signal to a control unit 60 which causes the motor 32 to immediately stop its rotation of the extruder screw 16.

Furthermore, the injection unit 10 includes a means for sensing an actual, secondary rear end position of the wall member obtained shortly after the interruption of the supply of molten plastic material to the metering chamber, and a means for obtaining a predetermined length of the forward stroke of the moveable wall, thereby to inject an accurately metered constant dosage of molten plastic material during each shot. As mentioned in the introductory part of the specification, the extruder screw, and thus the moveable wall, has a tendency of performing a continued backwards creeping movement after the moveable wall has reached its desired predetermined rear position, which could be ascribed to relaxation of the melt pressure being built up along the extruder screw during rotation thereof, when the rotation stops, and to inertia properties or dynamics of the hydraulic system controlling the piston for the forward axial displacement of the screw. Thus, the piston will, at the time of initiating a forward stroke for performing a shot of a dosage of melt into the moulding cavity, have reached an actual, secondary rear end position.

According to a preferred embodiment of the device of the present invention the means for sensing the actual, secondary rear end position of the wall member 48, and hence of the piston 28 connected thereto, is the same sensor 56 as senses said predetermined, primary rear position of the piston 28, whereas the means for obtaining a predetermined length of the forward stroke of the wall member 48 includes an adjustable end stop for the piston 28 adjusted in dependence on the sensed actual rear end position of the movable wall so that a constant length of the forward stroke will always be positively and individually obtained for each shot.

The adjustable end stop comprises an elongate spindle 62 having a low pitch external thread in engagement with an internally threaded bore in the body 12, so that the spindle 62 protrudes into a forward hydraulic fluid chamber 64 of the cylindrical bore 34 thereby forming a mechanical end stop for the forward stroke of the piston 28. The other end of the spindle 62 carries a spur gear 66 which is in engagement with a pinion 68 rotatable by an electric motor 70. The operation of the motor 70 is controlled by the control unit 60 in response to the final, secondary rear position reached by the piston 28. Thus, a rotation of the pinion 68 in either direction will cause the spindle 62 and the spur gear 66 to move axially in either direction, as indicated by the arrow A in Fig. 1 and 2.

An operational sequence of the injection device of the present invention will now be described with reference to the Figs. 1 and 2.

Fig. 2 illustrates the injection unit 10 in a state of operation in which the piston 28 and the extruder screw 16 have completed a predetermined forward stroke to inject a predetermined volume ("shot dosage") of molten plastic material in the metering chamber 24 into a moulding cavity of a moulding machine (not shown) for moulding a centrally apertured disc substrate having a specific thickness. In this state the forward stroke of the piston 28 has been interrupted by the end stop 62, and the wall member 48 rests against the seat 52 to cut off the fluid communication between the metering chamber 24 and the space 49.

The sequence of the next cycle, i.e. refilling the metering chamber 24 with a predetermined volume of molten plastic material, is commenced by activating the motor 32, thereby causing the extruder screw 16 to rotate in a direction to feed molten plastic material, supplied from the inlet tube 22 to the space 49, to enter the metering chamber 24 via the gap 54 (see the enlarged circle area in Fig. 1) which is opened when the wall member 48 slides forwardly to engagement with the shoulder 50 of the pin 46 during the initiated rearward linear movement of the screw 16 caused by the built-up hydraulic pressure in the metering chamber 24. Thus, the hydraulic pressure of the molten plastic material in the metering chamber 24 is exerted to the front surfaces of the screw thread 20 and causes the screw 16 to displace backwards while draining hydraulic fluid in the rear chamber 36 of the cylinder bore 34. Of course, the nozzle outlet located downstream of the metering chamber 24 is closed during this filling stage thereof. The backward movement of the screw 16 is continued until the piston 28 reaches a predetermined position thereof which is sensed by the sensor 56 through the medium of member 58 connected to the piston 28. The sensor 56 emits an output signal to the control unit 60 which, in response thereto, immediately stops the rotation of the motor 32. The piston 28 and the screw 16 is now permitted to rest for a short period of time (between about some tenths of a second and 1,5 second) while waiting for the moulding machine to become ready for the next shot. Due to pressure relaxation of the molten plastic material along the screw 16 during the interval before the activation of the piston 28 to initiate the next shot, and due to possible inertia phenomena of the hydraulic system controlling the forward movement of the piston 28, the predetermined rear end position reached by the piston 28 may be further displaced rearwardly to a secondary, actual rear position which may vary from time to time due to different parameters having influence on the piston position.

In order to compensate for any impact such discrepancies of the volume of plastic material may have on the thickness of the disc substrate being moulded in the cavity as the piston performs a forward stroke, the sensor 56 also senses the secondary, actual rear position taken by the piston 28 and emits an output signal to the control unit 60 which in turn instructs the motor 70 to rotate the pinion 68 and the spur gear 66 and to cause a rotation and thus a linear displacement of the spindle 62 to adjust the position of the rear end thereof in accordance with the actual rear position of the piston 28. This will ensure that the rear end surface of the spindle 62 forming the end stop for the forward stroke of the piston 28 always will occupy an accurate position for achieving a predetermined length of the forward stroke of the piston 28, independent of varying actual rear end positions taken by the piston 28.

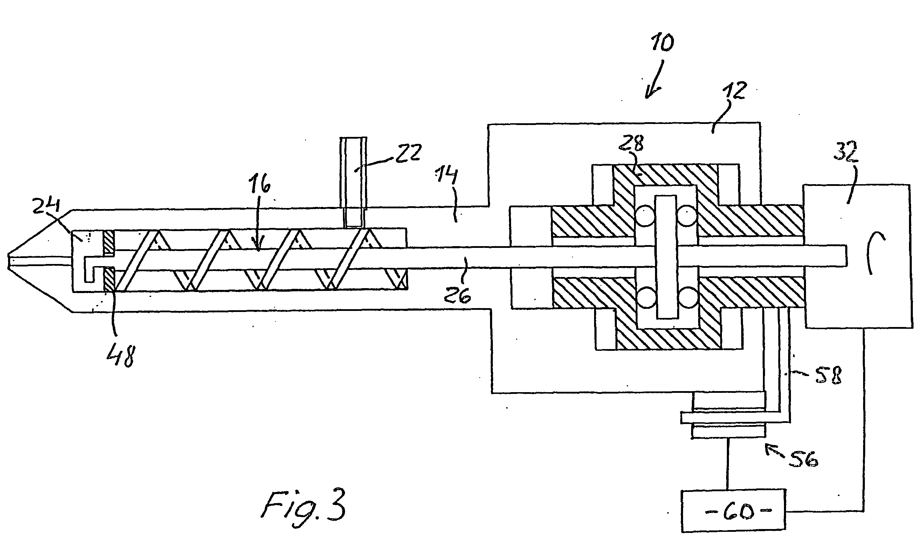

Fig. 3 illustrates a second, more simplified embodiment of the device of the present invention. This embodiment differs from the one described in connection with Figs. 1 and 2 in that it does not include an adjustable mechanical end stop means for the forward stroke of the piston 28 and thus of the moveable wall 48. In lieu of a mechanical stop means a predetermined length of the forward stroke of the moveable wall 48 calculated from the secondary rear end position is secured by the sensor 56 and the control unit 60 themselves with assistance of suitable computer software controlling the hydraulics for the forward movement of the piston 28. Thus, in this embodiment the sensor 56 not only senses the primary and secondary rear end positions of the piston 28 but also a third, forward position thereof, which is determined by the control unit 60 in dependence of the actually sensed secondary rear end position so as to obtain a predetermined length of the forward stroke of the piston 28 and thus of the moveable wall 48 resulting in an accurately metered, constant dosage of molten plastic material being injected during each shot.

## Claims

1. In an injection moulding machine for moulding centrally apertured optical discs, a method for accurately controlling a shot dosage of molten plastic material to be injected into a moulding cavity of a moulding machine comprising the steps of:
sensing a rearward movement of a movable wall of the metering chamber;
immediately interrupting the supply of the molten plastic material to the metering chamber when the movable wall of the metering chamber has reached a sensed, predetermined, primary rear position;
sensing an actual, secondary rear end position of the moveable wall obtained shortly after the interruption of the supply of molten plastic material; and
actuating the moveable wall to perform a predetermined length of a forward stroke thereof from the obtained secondary rear end position, thereby to inject an accurately metered dosage of molten plastic material into the moulding cavity.

2. The method as set forth in claim 1, comprising the further step of adjusting, in dependence on the sensed secondary rear end position of the moveable wall, the position of an end stop means for the forward stroke of the moveable wall, so that a constant length of the forward stroke will always be positively and individually obtained for each shot.

3. In an injection moulding machine for moulding centrally apertured optical discs, a method for accurately controlling a shot dosage of molten plastic material to be injected into a moulding cavity of a moulding machine comprising the steps of:
sensing a rearward movement of a movable wall of the metering chamber;
immediately interrupting the supply of the molten plastic material to the metering chamber when the movable wall of the metering chamber has reached a sensed, predetermined, primary rear position;
sensing an actual, secondary rear end position of the moveable wall obtained shortly after the interruption of the supply of molten plastic material;
actuating the moveable wall to perform a forward movement thereof from the obtained secondary rear end position; and
immediately interrupting the forward movement of the moveable wall when it has reached a predetermined third, forward end position, thereby to inject an accurately metered dosage of molten plastic material into the moulding cavity.

4. A device for accurately controlling a shot dosage of molten plastic material to be injected into a moulding cavity of a moulding machine when moulding centrally apertured optical discs, comprising an injection unit, including:
an injection nozzle,
a shot metering chamber upstream thereof,
a means for supplying molten plastic material to said metering chamber,
a piston member connected to a movable wall of the metering chamber,
a means for sensing a predetermined, primary rear position of the movable wall,
a means for interrupting the supply of the molten plastic material to the metering chamber when the movable wall has reached said predetermined rear position,
a means for sensing an actual, secondary rear end position of the moveable wall obtained shortly after the interruption of the supply of molten plastic material to the metering chamber, and
a means for obtaining a predetermined length of a forward stroke of the moveable wall, thereby to inject an accurately metered constant dosage of molten plastic material during each shot.

5. The device as set forth in claim 4, wherein said means for obtaining a predetermined length of the forward stroke of the moveable wall comprises a means for actuating the moveable wall to perform a forward movement thereof from the obtained secondary rear end position, a means for sensing a predetermined third, forward position of the moveable wall, and a means for immediately interrupting the forward movement of the moveable wall when it has reached the predetermined third, forward position.

6. The device as set forth in claim 4, wherein said means for obtaining a predetermined length of the forward stroke of the moveable wall comprises a means for actuating the moveable wall to perform a forward movement thereof from the obtained secondary rear end position, and a means for adjusting a forward end stop for the piston member in dependence on the sensed actual rear end position of the movable wall so that a constant length of the forward stroke will always be positively and individually obtained for each shot.

7. The device as set forth in claim 6, wherein said adjusting means comprises a motor-driven pinion and mutually engaging threaded elements, one of which being rotatable by said pinion, whereas one of said elements being linearly displaceable upon rotation of one of said elements, thereby to displace the forward end stop for the piston member to a desired position, in dependence on the sensed actual rear end position of the movable wall.

8. The device as set forth in claim 7, wherein said means for sensing the predetermined, primary rear position and said means for sensing the actual, secondary rear position are integrated into a common sensor unit.

9. The device as set forth in claim 4, wherein said moveable wall is a part of a front end of an extruder screw of an injection unit.

10. The device as set forth in claim 9, wherein said front end part is a washer member slideable on a front end pin of the extruder screw, between a position preventing supply of molten plastic material to the metering chamber, and a position permitting such supply to said chamber.
